# EUROPÄISCHE PATENTANMELDUNG

(11) **EP 0 935 330 A2**
(43) Veröffentlichungstag der Anmeldung: **11.08.1999**
(21) Anmeldenummer: 98122885.1
(22) Anmeldetag: 02.12.1998
(51) Int. Cl.: H02K 1/27

(54) **Synchronmaschine, insbesondere Generator für ein Kraftfahrzeug**

(30) Priorität: 26.01.1998 DE 19802785
(71) Anmelder: ROBERT BOSCH GMBH, 70442 Stuttgart (DE)
(72) Erfinder: Ragaly, Istvan, 71701 Schwieberdingen (DE); Lechner, Jürgen, 71735 Eberdingen-Nussdorf (DE); Shendi, Alexander, 71679 Asperg (DE); Groeter, Hans-Peter Dr., 71655 Vaihingen (DE); Briand, Sylvain, Cardiff CFS2PA (GB); Syrop, Alan Dr., Cardiff CF5 2LD (GB)

(57) **Zusammenfassung**

Die Erfindung betrifft eine Synchronmaschine, insbesondere Generator für ein Kraftfahrzeug, mit einem Erregersystem aus einer Vielzahl von elektrisch erregten Einzelpolen im Rotor, vorzugsweise in Form von durch zumindest eine gemeinsame Erregerspule erregter Klauenpole, bei der zur Kompensation des magnetischen Streuflusses in die Freiräume zwischen den axial gegeneinander gerichteten Klauenpolen der an den axialen Enden des Rotors angebrachten Polplatinen Permanentmagnete eingebracht sind, welche von einer Halterung gegenüber Zentrifugalkräften abgestützt und von dieser gehalten sind. Der Einbau der Permanentmagnete wird durch eine besonders einfach und kostengünstig herstellbare Halterung bezüglich Teile- und Montageaufwand wesentlich erleichtert und vereinfacht.

## Beschreibung

### Stand der Technik

Die Erfindung betrifft eine Synchronmaschine, insbesondere Generator für ein Kraftfahrzeug, mit einem Erregersystem aus einer Vielzahl von elektrisch erregter "Einzelpole" im Rotor, vorzugsweise in Form von durch zumindest einer gemeinsamen Erregerspule erregter Klauenpole, bei der zur Kompensation des magnetischen Streuflusses in die Freiräume zwischen den axial gegeneinander gerichteten Klauenpolen der an den axialen Enden des Rotors angebrachten Polplatinen Permanentmagnete eingebracht sind, welche von einer Halterung gegenüber Zentrifugalkräften abgestützt und von dieser gehalten sind.

Eine Synchronmaschine dieser Art ist aus der DE 89 05 353 U1 bekannt. Dabei sind die Permanentmagnete in den Freiräumen zwischen den gegeneinander gerichteten Klauenpolen mittels Halteplatten gegen die Zentrifugalkräfte gerichtet und so magnetisiert sind, daß sie dem Streufluß entgegenwirken. Die Halteplatten werden umfangsseitig in Erweiterungen der Klauenpole eingesetzt und festgelegt, während sie sich der Maschinenmittelachse zugekehrt auf einer unmagnetischen Hülse abstützen, die die Erregerstufe umschließt. Dieser Einbau der Permanentmagnete erfordert nicht nur einen erheblichen, von der Polzahl der Synchronmaschine abhängigen Teileaufwand sondern bedingt auch einen erheblichen Montageaufwand für die Halteplatten. Der Rotor der Synchronmaschine ist daher teuer in seiner Herstellung. Außerdem sind die Permanentmagnete in axialer Richtung nicht eindeutig gegen axiale Stoßkräfte gesichert.

Wie die US 5,543,676 zeigt, ist es auch schon bekannt, U-förmige Permanentmagnete zwischen Erregerspule und Klauenpole einzuschieben, wobei die Seitenschenkel der Permanentmagnete in die Freiräume zwischen den Klauenpolen eingeführt werden. Diese Permanentmagnete reichen nur bis zur axialen Mitte der Freiräume, da von jeder Spitze eines Klauenpols aus ein Permanentmagnet eingeschoben wird.

Es ist auch eine mäanderförmige und ringförmige Halterung für die Permanentmagnete bekannt, die als Einheit vorgefertigt ist und bei der Montage des Rotors auf den Polkern mit der Erregerwicklung aufgeschoben wird, bevor von beiden axialen Enden her die Polplatinen mit ihren Klauenpolen angebracht werden. Dabei werden die Klauenpole in die axial offenen Aufnahmen der Halterung eingeführt, wie die UK 2 281 665 A zeigt. Diese bekannte Halterung ist im Aufbau kompliziert und aufwendig in der Herstellung. Zudem sind die Permanentmagnete und auch die Halterung selbst nicht eindeutig gegen Zentrifugalkräfte und axiale Stoßkräfte gerichtet.

Es ist Aufgabe der Erfindung, für eine Synchronmaschine der eingangs erwähnten Art eine Halterung für die Permanentmagnete zu schaffen, die einfach im Aufbau und leicht sowie kostengünstig herstellbar ist, dabei aber in einfacher Weise bei der Montage des Rotors radial und axial eindeutig festlegbar ist.

Diese Aufgabe wird nach der Erfindung, einmal dadurch gelöst, daß die Halterung aus zwei Haltescheiben gebildet ist, die an den axialen Enden des Erregersystems auf den Außenseiten der Polplatinen angebracht und mit angeformten und abgekanteten Haltestreifen abwechselnd in die Freiräume zwischen den Klauenpolen eingeführt sind, daß die Haltestreifen die Permanentmagnete tragen und daß die Haltestreifen die Permanentmagnete gegen Zentrifugalkräfte abstützen, sich über die gesamte axiale Richtung des Erregersystems erstrecken und an den benachbarten Klauenpolen gehalten sind und zum anderen dadurch, daß die Halterung aus zwei Haltehülsen gebildet ist, die unter den Klauenpolen der zugeordneten Polplatine angeordnet und mit angeformten, abgekanteten Haltestreifen in die Freiräume zwischen den Klauenpolen eingeführt sind, daß die Haltestreifen die Permanentmagnete gegen Zentrifugalkräfte abstützen und daß die Haltestreifen an den benachbarten Klauenpolen gehalten sind.

In jedem Fall werden die Haltescheiben bzw. Haltehülsen mit den an den Haltestreifen angebrachten Permanentmagneten vorgefertigt und mit den Polplatinen verbunden, bevor sie an dem vormontierten Erregersystem angebracht werden. Die Halterung besteht in jedem Fall aus zwei einfachen Teilen, die als Stanz-Biegeteile leicht und kostengünstig herstellbar ist.

Bei der ersten Lösung werden die Haltescheiben von den Außenseiten der Polplatinen aus aufgeschoben, wobei die Haltestreifen an einer Seite der Klauenpole anliegend fixiert werden können. Die so vorgefertigten Einheiten können auf beide axiale Enden des Erregersystems aufgesteckt werden, wobei die Klauenpole der beiden Polplatinen mit den einseitig anliegenden Haltestreifen mit Permanentmagneten ineinander verschachtelt werden und zwar unabhängig davon, ob die Freiräume parallel zur Maschinenmittelachse verlaufen oder gegeneinander im Klauenwinkel geneigt sind.

Bei der zweiten Lösung werden die Haltehülsen von der Polseite aus unter die Klauenpole der zugeordneten Polplatine eingeschoben und darin festgelegt. Die so vorgefertigten Einheiten aus Polplatine und Haltehülse mit Permanentmagneten können in gleicher Weise von den axialen Enden her auf das vorgefertigte Erregersystem aufgesteckt werden. Dabei kann die axiale Fixierung in bekannter Weise z.B. auf der Rotorwelle vorgenommen werden.

Es sind nur zwei einfache Stanz-Biegeteile für die Halterung erforderlich, die die Permanentmagnete eindeutig gegen Zentrifugalkräfte abstützen, ohne die Montage des Rotors zu erschweren. Die Vormontage der Polplatinen und den Haltescheiben oder Haltehülsen läßt sich in einfacher Weise in den Fertigungsablauf des Rotors integrieren.

Ist nach einer Ausgestaltung vorgesehen, daß die der halben Polzahl entsprechende Anzahl der Haltestreifen an den Haltescheiben parallel zueinander verlaufen oder in gleicher Richtung geneigt sind, dann läßt sich die Lösung mit Haltescheiben sowohl bei Freiräumen anwenden, die parallel zur Maschinenmittelachse verlaufen, als auch bei Klauenpolen mit Klauenwinkel und gegeneinander geneigten Freiräumen.

Die Lösung mit den Haltehülsen läßt sich einmal so gestalten, daß die Haltestreifen abwechselnd an der einen oder anderen Haltehülse angeformt und abgekantet sind und sich über die gesamte axiale Abmessung der Freiräume erstrecken. Dabei können die Haltestreifen zur Maschinenmittelachse parallel oder geneigt verlaufen. Zum anderen können die Haltestreifen an den Haltehülsen als im Klauenwinkel geneigte Paare angeformt und abgekantet sein, die sich etwa bis zur axialen Mitte des Erregersystems erstrecken und in alle die Paare von Freiräume eingeführt sind, die im Bereich des zugekehrten axialen Endes des Erregersystems aufeinanderstoßen.

Die radiale Sicherung des Haltestreifen an den Klauenpolen kann nach einer Ausgestaltung so erfolgen, daß die Haltestreifen der Haltescheiben oder Haltehülsen von überdeckenden Vorsprüngen oder Stegen der benachbarten Klauenpole radial gehalten sind.

Die Halterung kann im Bedarfsfalle zur Erhöhung der Stabilität mit den Polplatinen und/oder den Klauenpolen verschweißt werden.

Eine weitere Erhöhung der Stabilität wird dadurch erreicht, daß die freien Enden der Haltestreifen jeweils mit der zugekehrten Haltescheibe oder Haltehülse verschweißt sind oder daß die Spitzen der Klauenpole mit der zugekehrten Haltescheibe verschweißt sind.

Die Permanentmagnete sind auf der der Maschinenmittelachse zugekehrten Seite der Haltestreifen fest mit diesen verbunden, so daß sie ausreichenden Halt an den Hal-tescheiben oder Haltehülsen haben und eindeutig positioniert sind.

Die Permanentmagnete können auch aus mehreren Schichten zusammengesetzt sein, die unterschiedliche Festigkeit besitzen.

Die Permanentmagnete können unterschiedlich verteilt angeordnet sein. So sind Ausgestaltungen denkbar, die dadurch gekennzeichnet sind, daß ein Haltestreifen in Längsrichtung der Freiräume einen einzigen durchgehenden, einstückigen Permanentmagneten trägt oder daß ein Haltestreifen in Längsrichtung der Freiräume zwei oder mehrere Permanentmagnete trägt oder daß ein Haltestreifen in Umfangsrichtung der Freiräume zwei oder mehrere Permanentmagnete trägt, die auch aus mehreren Schichten bestehen können.

Auf zusätzliche Lüfterräder am Rotor kann verzichtet werden, wenn vorgesehen ist, daß die Haltescheiben oder Haltehülsen mit ausgestanzten und abstehend ausgebogenen Lüfterflügeln versehen sind.

Eine weitere Vereinfachung bei der Verwendung von Halteringen ergibt sich dadurch, daß die Halteringe an den Haltescheiben oder Haltehülsen angeformt sind.

Die Erfindung wird anhand von in den Zeichnungen dargestellten Ausführungsbeispielen näher erläutert. Es zeigen:
- Fig. 1 und 2: in Draufsicht die beiden Stanzteile mit entgegengesetzter Neigung von Strahlenfingern für eine Halterung nach Fig. 3,
- Fig. 3: die beiden Haltescheiben mit abgekanteten Haltestreifen in Montagestellung,
- Fig. 4 und 5: im Teilschnitt zwei Varianten zur radialen Abstützung der Haltestreifen,
- Fig. 6: in perspektivischer Ansicht eine Haltescheibe mit an jedem Haltestreifen festgelegten einstückigen Permanentmagneten,
- Fig. 7: in perspektivischer Ansicht eine Haltescheibe, bei der an jedem Haltestreifen zwei Permanentmagnete ineinander festgelegt sind,
- Fig. 8: in perspektivischer Ansicht einen fertig montierten Rotor mit zwei Haltescheiben,
- Fig. 9: in perspektivischer Ansicht einen fertig montierten Rotor mit zwei Haltehülsen,
- Fig. 10: eine Teilansicht einer Haltehülse für den Rotor nach Fig. 9 mit Paaren von Haltestreifen,
- Fig. 11: eine Teilansicht einer Haltehülse mit einzelnen Haltestreifen, die parallel oder geneigt zur Maschinenmittelachse verlaufen können,
- Fig. 12: eine Teilansicht, die die Abkantung des Haltestreifens an der Haltescheibe erkennen läßt,
- Fig. 13: einen Rotor, bei dem die Klauenspitzen durch zusätzliche Halteringe gegen Zentrifugalkräfte gerichtet sind,
- Fig. 14: eine Teilansicht mit Klauenspitze und Haltering und
- Fig. 15: eine Teilansicht einer Haltescheibe mit ausgestanztem und ausgebogenem Lüfterflügel.

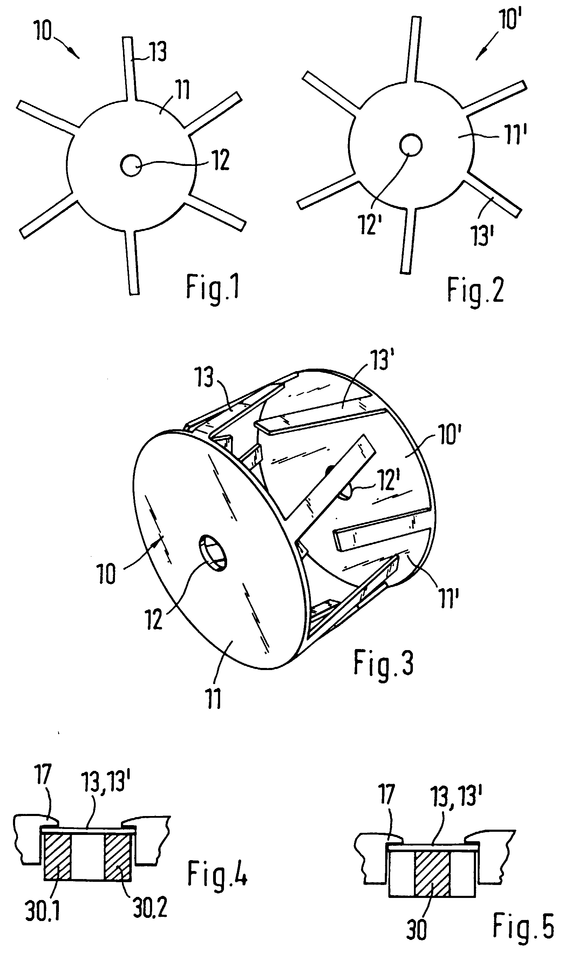

Wie die Fig. 1 und 2 zeigen, besteht eine Halterung nach einer ersten Ausgestaltung aus zwei Teilen, die in einem ersten Arbeitsgang als Stanzteile 10 und 10' hergestellt sein können. Tragen die Polplatinen Klauenpole, die sich zur Polspitze hin verjüngen, dann stehen die Strahlenfinger 13 und 13' nicht radial, sondern sind im gleichen Uhrzeigersinn entsprechend dem Klauenwinkel geneigt. Die Stanzteile 10 und 10' sind zentrisch mit der Bohrung 12 bzw. 12' für die Rotorwelle versehen. Die Haltescheiben 11 und 11' sind mit den angeformten Strahlenfingern 13 und 13' einstückig ausgebildet. Diese Stanzteile 10 und 10' sind identisch. Für die Abkantungen der dann als Haltestreifen 13 und 13' dienenden Strahlenfinger werden die Stanzteile 10 und 10' umgekehrt in eine Biegeform eingelegt.

Fig. 3 zeigt die für eine Halterung erforderlichen zwei Haltescheiben 11 und 11' mit den in Montagestellung gegeneinander gerichteten und ineinander verschachtelten Haltestreifen 13 und 13', so daß zwischen den benachbarten Haltestreifen 13 und 13' abwechselnd eine Aufnahme für einen Klauenpol der einen und der anderen Polplatine entsteht.

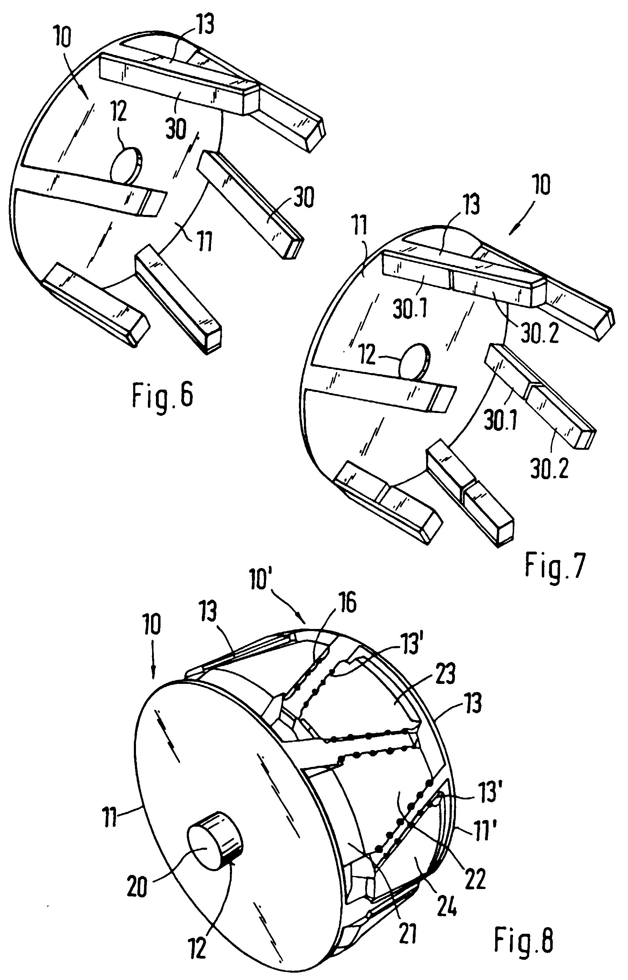

Wie die Fig. 6 und 7 zeigen, werden an den Haltestreifen 13 die Permanentmagnete 30 bzw. 30.1 und 30.2 fest angebracht, z.B. angeklebt. Dabei kann sich ein einstückiger Permanentmagnet 30 über die gesamte Länge der Haltestreifen 13 erstrecken. Es können auch zwei (oder mehr) Permanentmagnete 30.1 und 30.2 hintereinander angebracht sein. Die Permanentmagnete sind dabei stets auf der der Maschinenmittelachse zugekehrten Seite der Haltestreifen 13 angeordnet. Die Haltescheiben 11 bzw. 11' bilden dann vorgefertigte Einheiten, die mit den Polplatinen verbunden werden.

Die Haltescheiben 11 und 11' werden von den Außenstirnseiten der Polplatinen her auf diese aufgeschoben, wobei die Haltestreifen 13 einseitig zur Anlage mit den Klauenpolen gebracht werden. Die Klauenpole tragen Vorsprünge 17 oder Stege, welche die Haltestreifen 13 radial abstützen, indem sie die Haltestreifen 13 teilweise überdecken, wie die Schnitte nach Fig. 4 und 5 erkennen lassen.

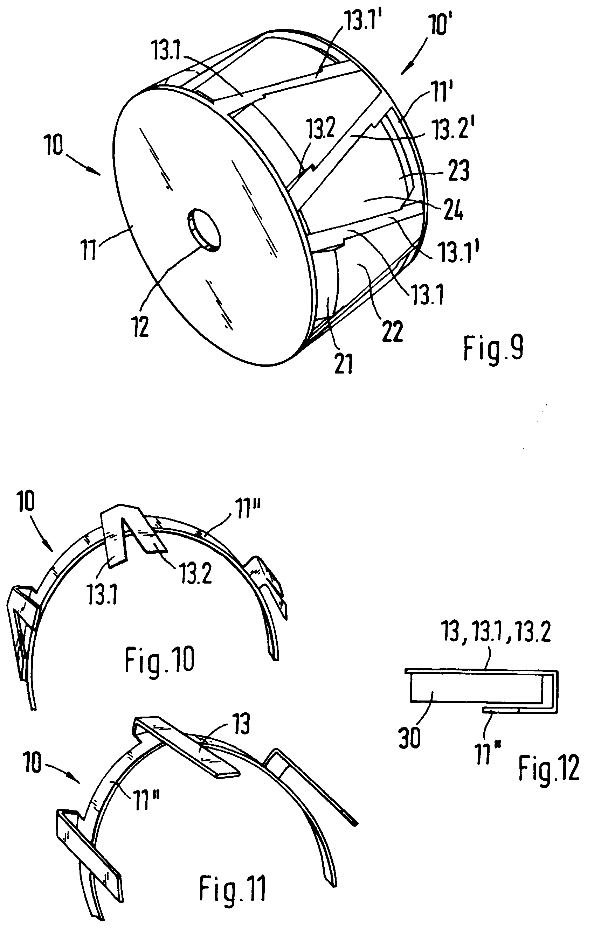

Dabei können die Haltestreifen 13 auch quer zu ihrer Längsrichtung mit einem oder zwei Permanentmagneten 30 oder 30.1 und 30.2 bestückt sein. Die Fixierung der Haltestreifen 13 auf den freien Längsseiten erfolgt beim Zusammenstecken der beiden Polplatinen durch die Klauenpole der jeweils anderen Polplatine. Wie Fig. 8 zeigt, wechseln die Klauenpole 22 und 24 der Polplatine 21 und 23 und auch die Haltestreifen 13 und 13' der beiden Haltescheiben 11 und 11' in Umfangsrichtung ab. Durch Verformung der Klauenwände können auch erst nach der Montage des Rotors Vorsprünge 16 gebildet werden, die die Haltestreifen 13 und 13' radial gegen Zentrifugalkräfte abstützen. Die Haltescheiben 11 und 11' können auf der Rotorwelle 20 fixiert werden, wie Fig. 9 zeigt.

Werden die Haltescheiben 11 und 11' mit den Haltestreifen 13 und 13' aus nichtferromagnetischem, schweißbarem Werkstoff, z.B. Edelstahl, Messing, Bronze oder Aluminium, hergestellt, dann können die Haltestreifen 13 und 13' mit den benachbarten Klauenpolen 22 und 24 auch zusätzlich verschweißt und damit die Stabilität der Halterung erhöht werden. Die Klauenspitzen können auch mit den zugekehrten Haltescheiben 11' bzw. 11 oder Polplatinen 24 bzw. 22 verschweißt werden, wenn sich die Haltestreifen über die gesamte axiale Abmessung des Rotors erstrecken.

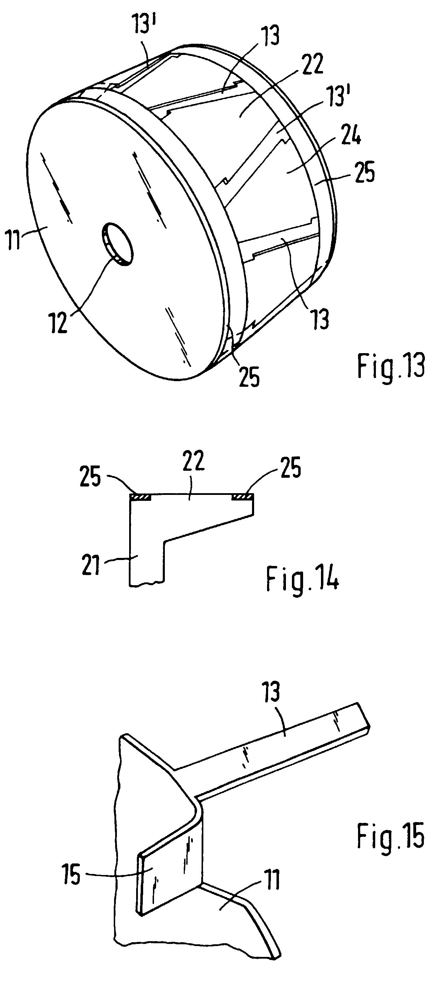

Bei einem Rotor mit Polplatinen mit sich verjüngenden Klauenpolen 22 und 23 nach Fig. 9 können auch Haltehülsen 11'' nach Fig. 10 verwendet werden. Die Paare von Haltestreifen 13.1 und 13.2 sind entsprechend der Neigung der Freiräume zwischen den Klauenpolen 22 und 23 geneigt an der Haltehülse 11 angeformt und hochgekantet, wie Fig. 12 erkennen läßt. Diese Haltehülsen 11'' lassen sich von der Klauenseite aus auf die Polplatinen 21 und 23 aufstecken, wobei die Klauenpole jeweils zwischen die Paare von Haltestreifen 13.1 und 13.2 eingeführt werden. Die Klauenpole 22 und 24 stehen dann mit ihren Spitzenbereichen zwischen den freien Enden der Haltestreifen 13.1 und 13.2, da diese sich nur etwa bis zur axialen Mitte des Erregersystems erstrecken, wenn die Polplatinen auf das Erregersystem aufgebracht sind. Die vorstehenden Spitzenbereiche der Klauenpole finden dabei ausreichend Platz zwischen den beiden Haltestreifen 13.1 und 13.2 der Paare der jeweils anderen Polplatine 23 bzw. 21, wie der Fig. 9 zu entnehmen ist, bei der die Paare von Haltestreifen 13.1 und 13.2 jedoch an Haltescheiben 11 und 11' angeformt und abgekantet sind. Es ist jedoch mit den Haltehülsen 11'' nach Fig. 10 dieselbe umfangsseitige Verteilung der Haltestreifen 13.1 und 13.2 bzw. 13.1' und 13.2'' zu erreichen, wie sie der Fig. 9 zu entnehmen ist.

Wie die Haltehülse 11' nach Fig. 11 zeigt, können an dieser auch nur einzelne Haltestreifen 13 angeformt und als Aufnahmen für die Permanentmagnete 30 hochgekantet sein. Diese Haltestreifen 13 können sich bei parallel zur Maschinenmittelachse verlaufenden Freiräumen zwischen den Klauenpolen 22 und 23 über die gesamte axiale Abmessung der Freiräume erstrecken, so daß als Halterung nur eine einzige Haltehülse 11' erforderlich ist. An der Haltehülse 11' müssen dann entsprechend der Polzahl Haltestreifen 13 angeformt und abgekantet sein.

Es lassen sich auch zwei Haltehülsen 11' als Halterung verwenden, wenn sich die Haltestreifen 13 nur bis zur Mitte des Erregersystems erstrecken. Dabei hat jede Haltehülse 11' eine der Polzahl entsprechende Anzahl von Haltestreifen 13.

Erstrecken sich die Haltestreifen 13 über die gesamte axiale Abmessung der Freiräume, dann können auch zwei identische Haltehülsen 11' nach Fig. 11 verwendet werden, bei denen die Anzahl der Haltestreifen 13 der halben Polzahl entspricht.

Wie Fig. 13 zeigt, kann der Rotor auch mit Haltescheiben 11 und 11' aufgebaut werden, die im Bereich der Polplatinen 21 und 23 mit zusätzlichen Halteringen 25 und 25' radial gegen Zentrifugalkräfte gerichtet sind. Dabei können die Klauenspitzen umfangsseitig Aufnahmen tragen, die den Haltering 25 bündig aufnehmen, wie Fig. 14 zeigt.

An den Haltescheiben können zusätzlich Lüfterflügel 15 ausgestanzt und ausgebogen sein, wie Fig. 15 zeigt. Die Haltescheiben 11 übernehmen dabei eine weitere Funktion. Ein getrenntes Lüfterflügelrad ist dann nicht mehr erforderlich.

Für die Bestückung der Haltestreifen mit Permanentmagneten und ihre Festlegung an den Klauenpolen bzw. Polplatinen gilt für die Verwendung von Haltehülsen 11'' dasselbe wie bei der Verwendung von Haltescheiben 11 und 11'.

## Patentansprüche

1. Synchronmaschine, insbesondere Generator für ein Kraftfahrzeug, mit einem Erregersystem aus einer Vielzahl elektrisch erregter "Einzelpole" im Rotor, vorzugsweise in Form von durch zumindest einer gemeinsamen Erregerspule erregten Klauenpolen, bei der zur Kompensation des magnetischen Streuflusses in die Freiräume zwischen den axial gegeneinander gerichteten Klauenpolen der an den axialen Enden des Rotors angebrachten Polplatinen Permanentmagnete eingebracht sind, welche von einer Halterung gegenüber Zentrifugalkräften abgestützt und von dieser gehalten sind,
dadurch gekennzeichnet,
daß die Halterung aus zwei unmagnetischen Haltescheiben (11, 11') gebildet ist, die an den axialen Enden des Erregersystems auf den Außenstirnseiten der Polplatinen (21, 23) angebracht und mit angeformten und abgekanteten Haltestreifen (13, 13') abwechselnd in die Freiräume zwischen den Klauenpolen (22, 24) eingeführt sind,
daß die Haltestreifen (13, 13') die Permanentmagnete (30; 30.1; 30.2) tragen und
daß die Haltestreifen (13, 13') die Permanentmagnete (30; 30.1; 30.2) gegen Zentrifugalkräfte abstützen, sich über die gesamte axiale Richtung des Erregersystems erstrecken und an den benachbarten Klauenpolen (22, 24) gehalten sind.

2. Synchronmaschine, insbesondere Generator für ein Kraftfahrzeug, mit einem Erregersystem aus einer Vielzahl elektrisch erregter "Einzelpole" im Rotor, vorzugsweise in Form von durch zumindest einer gemeinsamen Erregerspule erregten Klauenpolen, bei der zur Kompensation des magnetischen Streuflusses in die Freiräume zwischen den axial gegeneinander gerichteten Klauenpolen der an den axialen Enden des Rotors angebrachten Polplatinen Permanentmagnete eingebracht sind, welche von einer Halterung gegenüber Zentrifugalkräften abgestützt und von dieser gehalten sind,
dadurch gekennzeichnet,
daß die Halterung aus zwei unmagnetischen Haltehülsen (11'') gebildet ist, die unter den Klauenpolen (22 bzw. 24) der zugeordneten Polplatine (21 bzw. 23) angeordnet und mit angeformten, abgekanteten Haltestreifen (13; 13.1; 13.2) in die Freiräume zwischen den Klauenpolen (22, 24) eingeführt sind,
daß die Haltestreifen (13; 13.2; 13.3) die Permanentmagnete (30) gegen Zentrifugalkräfte abstützen und
daß die Haltestreifen (13, 13') an den benachbarten Klauenpolen (22, 24) gehalten sind.

3. Synchronmaschine nach Anspruch 1,
dadurch gekennzeichnet,
daß der halben Polzahl entsprechende Anzahl der Haltestreifen (13, 13') an den Haltescheiben (11, 11') parallel zueinander verlaufen oder in gleicher Richtung geneigt sind.

4. Synchronmaschine nach Anspruch 2,
dadurch gekennzeichnet,
daß die Haltestreifen (13) abwechselnd an der einen oder anderen Haltehülse (11') angeformt und abgekantet sind und sich über die gesamte axiale Abmessung der parallel oder geneigt zur Maschinenmittelachse verlaufenden Freiräume erstrecken (Fig. 11).

5. Synchronmaschine nach Anspruch 2,
dadurch gekennzeichnet,
daß die Haltestreifen (13.1; 13.2) an den Haltehülsen (11'') als im Klauenwinkel geneigte Paare angeformt und abgeändert sind, die sich etwa bis zur axialen Mitte des Erregersystems erstrecken und in alle die Paare von Freiräume eingeführt sind, die im Bereich des zugekehrten axialen Endes des Erregersystems aufeinanderstoßen.

6. Synchronmaschine nach einem der Ansprüche 1 bis 5,
dadurch gekennzeichnet,
daß die Haltestreifen (13; 13.1; 13.2; 13') der Haltescheiben (11, 11') oder Haltehülsen (11'') von überdeckenden Vorsprüngen (16) oder Stegen (17) der benachbarten Klauenpole (22, 24) radial gehalten oder in Nuten der Klauenpole (22, 24) eingeschoben sind.

7. Synchronmaschine nach Anspruch 6,
dadurch gekennzeichnet,
daß die Vorsprünge (16) erst nach dem Einführen der Haltestreifen (13; 13.1; 13.2; 13') durch Verformung der Klauenwände gebildet sind.

8. Synchronmaschine nach einem der Ansprüche 1 bis 7,
dadurch gekennzeichnet,
daß die Haltescheiben (11, 11') oder Haltehülsen (11'') mit den Haltestreifen (13; 13.1; 13.2; 13'') als Stanz-Biegeteile aus nichtferromagnetischem, schweißbarem Werkstoff hergestellt sind.

9. Synchronmaschine nach Anspruch 8,
dadurch gekennzeichnet,
daß die Haltestreifen (13; 13.1; 13.2; 13') mit den benachbarten Klauenpolen (22, 24) verschweißt sind.

10. Synchronmaschine nach Anspruch 8,
dadurch gekennzeichnet,
daß die freien Enden der Haltestreifen (13; 13.1; 13.2; 13') jeweils mit der zugekehrten Haltescheibe (11 bzw. 11') oder Haltehülse (11'') verschweißt sind.

11. Synchronmaschine nach einem der Ansprüche 1 bis 10,
dadurch gekennzeichnet,
daß die Spitzen der Klauenpole (22, 24) mit der zugekehrten Haltescheibe (11 bzw. 11') verschweißt sind.

12. Synchronmaschine nach einem der Ansprüche 1 bis 11,
dadurch gekennzeichnet,
daß die Permanentmagnete (30; 30.1; 30.2) auf der der Maschinenmittelachse zugekehrten Seite der Haltestreifen (13; 13.1; 13.2; 13') fest mit derselben verbunden sind.

13. Synchronmaschine nach einem der Ansprüche 1 bis 12,
dadurch gekennzeichnet,
daß ein Haltestreifen (13; 13.1; 13.2; 13') in Längsrichtung der Freiräume einen einzigen durchgehenden, einstückigen Permanentmagneten (30; 30.1; 30.2;) trägt.

14. Synchronmaschine nach einem der Ansprüche 1 bis 13,
dadurch gekennzeichnet,
daß ein Haltestreifen (13; 13.1; 13.2; 13') in Längsrichtung der Freiräume zwei oder mehrere Permanentmagnete (30.1; 30.2) trägt.

15. Synchronmaschine nach einem der Ansprüche 1 bis 13,
dadurch gekennzeichnet,
daß ein Haltestreifen (13; 13.1; 13.2; 13') quer in Umfangsrichtung der Freiräume zwei oder mehrere Permanentmagnete (30.1; 30.2) trägt, oder daß die Permanentmagnete (30.1, 30.2) in mehrere Schichten unterteilt sind.

16. Synchronmaschine nach einem der Ansprüche 1 bis 15,
dadurch gekennzeichnet,
daß die Haltescheiben (11, 11') oder Haltehülsen (11'') mit ausgestantzen und abstehend ausgebogenen Lüfterflügeln (15) versehen sind.

17. Synchronmaschine nach einem der Ansprüche 1 bis 16,
dadurch gekennzeichnet,
daß die Klauenspitzen mittels Halteringen (25) gegen Zentrifugalkräfte abgestützt sind.

18. Synchronmaschine nach Anspruch 5, 8 oder 10,
dadurch gekennzeichnet,
daß die Halteringe (25) an den Haltescheiben (11) oder Haltehülsen (11', 11'') angeformt sind.
